# EUROPEAN PATENT APPLICATION

(11) **EP 4 660 340 A1**
(43) Date of publication of application: **10.12.2025**
(21) Application number: 24901994.4
(22) Date of filing: 30.04.2024
(51) Int. Cl.: C22C 21/06, C22B 9/05, B33Y 70/00, B33Y 10/00, C22C 21/00, B22F 10/28, B22F 9/08, B22F 9/14, C22C 1/02, C22C 1/03, C22B 9/10, C22B 9/04

(54) **ALUMINUM-ERBIUM ALLOY POWDER FOR ADDITIVE MANUFACTURING AND PREPARATION METHOD THEREFOR**

(30) Priority: 15.12.2023 CN 202311738228
(71) Applicant: Accmaterial Technology (Jiangsu) Co., Ltd, Suzhou, Jiangsu 215434 (CN)
(72) Inventor: CHEN, Zhe, Suzhou, Jiangsu 215434 (CN); LI, Yang, Suzhou, Jiangsu 215434 (CN); WANG, Mingliang, Suzhou, Jiangsu 215434 (CN); HU, Lei, Suzhou, Jiangsu 215434 (CN); ZHOU, Ying, Suzhou, Jiangsu 215434 (CN)
(74) Representative: Elzaburu S.L.P.
(86) International application number: PCT/CN2024/090743
(87) International publication number: WO 2025/123564

(57) **Abstract**

Designed in the present disclosure are a high-strength aluminum-erbium alloy for additive manufacturing and a preparation method therefor. The alloy comprises: 4-20 wt% of erbium (Er); 2-10 wt% of magnesium (Mg); less than or equal to 1 wt% of manganese (Mn); optionally, 0-1 wt% of scandium (Sc); and optionally, 0-1 wt% of zirconium (Zr). In the present disclosure, in order to improve both the formability and the mechanical properties of the alloy, based on alloy composition design assisted by a phase diagram calculation method, an Al-Er eutectic system is selected to reduce a solidification interval and form a fine grain phase, and therefore the technical effects of structure refinement, no thermal cracks and good printing performance are achieved; and in particular, a continuous cellular FCC configuration Al3Er eutectic network structure with a plastic deformation capability is introduced, with a size in the order of hundreds of nanometers, and therefore both strengthening and toughening effects are achieved. The aluminum-erbium alloy has both good printing formability and comprehensive mechanical properties, and the preparation method therefor is proven, has low costs and high efficiency, and can be used for large-scale industrial production.

## Description

The present application claims priority to the Chinese patent application submitted to the China National Intellectual Property Administration on December 15, 2023, with the application number of 2023117382286, titled "Aluminum-Erbium Alloy Powder for Additive Manufacturing and Preparation Method Thereof", the contents of which are incorporated herein by reference in their entirety.

### Technical Field

The present disclosure belongs to the field of aluminum alloy metallurgy, specifically relates to the composition design and preparation of aluminum alloy powders, and more particularly to a high-strength aluminum-erbium alloy powder for additive manufacturing and preparation method thereof.

### Background

Aluminum alloys, known for their low density, high specific strength, and excellent corrosion resistance, are ideal structural or functional materials widely used in aerospace, automotive, and shipbuilding industries. However, traditional aluminum alloy processing methods (such as casting, forging, and powder metallurgy) have limitations in processing products and parts with complex geometric shapes. Additive manufacturing, as a layered manufacturing technology, offers higher design and forming freedom and lower costs, providing a new solution to these challenges. However, additive manufacturing is a non-equilibrium solidification process characterized by rapid cooling rates (10³-10⁶ K/s) and large temperature gradients (~10⁻⁶ K/m), which can easily lead to metallurgical defects such as hot cracking, spheroidization, and porosity during the solidification process. Only a few alloy systems are suitable for printing parts that simultaneously have low density, specific microstructures, and high mechanical properties. Currently, the aluminum alloy systems suitable for additive manufacturing are mainly the Al-Si eutectic systems, which have a narrow solidification temperature range and are less prone to cracking, offering good printability. However, these systems have low strength and elongation, lacking competitive mechanical properties. For example, AlSi10Mg formed by Selective Laser Melting (SLM) has a yield strength of 300 MPa, a tensile strength of 490 MPa, and an elongation of only 4%. Traditional high-strength deformable aluminum alloy systems, such as the 2xxx (Al-Cu-Mg), 6xxx (Al-Mg-Si), and 7xxx (Al-Zn-Mg-Cu) series, have high alloying element contents and wide solidification temperature ranges without primary heterogeneous nucleating phases, making them unsuitable for additive manufacturing processes due to severe periodic intergranular hot cracking caused by coarse columnar grain growth. Therefore, there is an urgent need to develop easily formable, high-strength, and high-plasticity aluminum alloy systems suitable for the non-equilibrium rapid solidification processes of the additive manufacturing.

### Summary

The document describes one or more alloys and additive manufacturing components, as well as the methods for the manufacturing and/or using thereof. For example, one or more alloys or their composites can be aluminum alloys. These alloys may be used for three-dimensional (3D) printing and/or additive manufacturing components. Illustratively, the alloy can be a composite containing a variety of materials (such as elements, metals, etc.).

According to one aspect of the present disclosure, the alloy contains aluminum (Al), erbium (Er), magnesium (Mg), and manganese (Mn), wherein the composition of the alloy contains 4-20 wt% erbium (Er), 2-10 wt% magnesium (Mg), and less than or equal to 1 wt% manganese (Mn).

The alloy can have a yield strength of at least 440 megapascals (MPa), a tensile strength of at least 500 MPa, and/or an elongation of at least 4%.

The alloy can further optionally contain at least one of scandium (Sc) or zirconium (Zr). The alloy may contain 0-1 wt% scandium or 0-1 wt% zirconium.

The alloy can be in powder form. The alloy in powder form can further be used in additive manufacturing processes. The alloy can be a hypereutectic alloy.

The document also describes the method for manufacturing the aluminum alloy, which is prepared by a rapid solidification process. The rapid solidification process is, for example, one or more of atomization powdering, spray deposition, continuous casting, melt spinning, melt extraction, beam glazing, or additive manufacturing.

The document further describes the components prepared from the aforementioned alloy and the manufacturing method thereof.

### Compared to the prior art, the present disclosure has the following beneficial effects:

(1) The high-strength aluminum-erbium alloy powder described in the present disclosure exhibits excellent printability. Based on the Al-Er eutectic system, the solidification range is small and the tendency for hot cracking is low; moreover, in the contrary to other eutectic aluminum alloy systems, an additional primary Al₃Er phase is formed during the solidification process, and it is coherent with the aluminum matrix and thus acts for grain refining, further improving the solidification behavior and hot cracking resistance of the Al-Er system. After comparing the microstructure, it can be found that the equiaxed fine grain zone proportion in the Al-Er alloy examples of the present disclosure is significantly higher than that in Al-Ni system alloys, displaying superior solidification characteristics.
(2) The bulk material formed by selective laser printing of the aluminum-erbium alloy powder described in the present disclosure exhibits outstanding mechanical properties. The yield strength in the as-built state can exceed 530 MPa, tensile strength can exceed 550 MPa, and elongation can exceed 10%; after simple heat treatment, the yield strength can exceed 620 MPa, tensile strength can exceed 640 MPa, and elongation can exceed 8%. The yield strengths in both the as-printed and heat-treated states surpass all the current commercial additive manufacturing ultra-high-strength aluminum alloys.
(3) The Al₃Er eutectic phase inside the bulk material formed by selective laser printing of the aluminum-erbium alloy powder described in the present disclosure forms a cellular network structure, significantly enhancing the strength.
(4) The Al₃Er eutectic phase inside the bulk material formed by selective laser printing of the aluminum-erbium alloy powder described in the present disclosure contains numerous nanotwins and 9R phases, indicating that this eutectic phase (and the cellular network structure it composes) has plastic deformation capability, ensuring the material's strength-plasticity match. The appearance of nanotwins will also enhance the strength of the eutectic network structure, thereby improving the overall strength level of the material. Simultaneously, the Al₃Er eutectic phase having the FCC crystal structure is coherent with the aluminum matrix, facilitating the coordinated deformation therebetween.
(5) The method and process operation for preparing the high-strength aluminum-erbium alloy powder described in the present disclosure are simple and mature, low-cost and efficient, enabling large-scale industrial production.
(6) The high-strength aluminum-erbium alloy powder described in the present disclosure is highly suitable for additive manufacturing processes such as laser selective melting, enabling large-scale industrial production.

### Description of the drawings

By reading the detailed description of non-restrictive examples with reference to the following figures, other features, objectives, and advantages of the present disclosure will become more apparent:
Figure 1 shows the thermodynamic phase diagram of the Al-Er eutectic system.
Figure 2 shows the typical solidification path curves of the Al-Er-Mg-Mn-Zr system.
Figure 3 shows the variation of the hot cracking sensitivity factor in the Al-Er-Mg-Mn system as a function of the content of Mg and Mn.
Figure 4 shows the typical microstructure of Al-10.8Er-4.5Mg-0.6Mn-0.7Zr alloy powder prepared in Example 1.
Figure 5 shows the typical XRD spectrum of Al-10.8Er-4.5Mg-0.6Mn-0.7Zr alloy powder prepared in Example 1.
Figure 6 shows the typical microstructure of as-printed Al-10.8Er-4.5Mg-0.6Mn-0.7Zr bulk alloy prepared in Example 1.
Figure 7 shows the typical XRD spectrum of as-printed Al-10.8Er-4.5Mg-0.6Mn-0.7Zr bulk alloy prepared in Example 1.
Figure 8 shows the backscattered electron diffraction photograph of as-printed Al-10.8Er-4.5Mg-0.6Mn-0.7Zr bulk alloy prepared in Example 1.
Figure 9 illustrates a diagram of plenty of the cellular continuous eutectic network structure contained in the columnar grains in the alloy of Example 1.
Figure 10 shows the atomic structure of the Al₃Er eutectic phase in the alloy of Example 1.
Figure 11 shows the typical tensile curve of as-printed Al-10.8Er-4.5Mg-0.6Mn-0.7Zr bulk alloy prepared in Example 1.
Figure 12 shows the typical tensile curve of heat-treated Al-10.8Er-4.5Mg-0.6Mn-0.7Zr bulk alloy prepared in Example 1.
Figure 13 shows the typical microstructure of Al-10.8Er-4.5Mg-0.6Mn-0.5Sc-0.4Zr alloy powder prepared in Example 2.
Figure 14 shows the typical microstructure of as-printed Al-10.8Er-4.5Mg-0.6Mn-0.5Sc-0.4Zr bulk alloy prepared in Example 2.
Figure 15 shows the typical tensile curve of as-printed Al-10.8Er-4.5Mg-0.6Mn-0.5Sc-0.4Zr bulk alloy prepared in Example 2.
Figure 16 shows the typical tensile curve of heat-treated Al-10.8Er-4.5Mg-0.6Mn-0.5Sc-0.4Zr bulk alloy prepared in Example 2.
Figure 17 shows the typical tensile curve of as-printed Al-10.8Er-3.0Mg-0.6Mn-0.7Zr bulk alloy prepared in Example 3.
Figure 18 shows the typical tensile curve of as-printed Al-10.8Er-3.0Mg-0.6Mn-0.5Sc-0.4Zr bulk alloy prepared in Example 4.
Figure 19 shows the typical tensile curve of as-printed Al-10.8Er-8.5Mg-0.6Mn-0.7Zr bulk alloy prepared in Example 5.
Figure 20 shows the typical tensile curve of as-printed Al-10.8Er-8.5Mg-0.6Mn-0.5Sc-0.4Zr bulk alloy prepared in Example 6.
Figure 21 shows the typical tensile curve of as-printed Al-15.6Er-4.5Mg-0.6Mn-0.7Zr bulk alloy prepared in Example 7.
Figure 22 shows the typical tensile curve of as-printed Al-15.6Er-4.5Mg-0.6Mn-0.5Sc-0.4Zr bulk alloy prepared in Example 8.
Figure 23 shows the typical tensile curve of as-printed Al-15.6Er-3.3Mg-0.6Mn-0.7Zr bulk alloy prepared in Example 9.
Figure 24 shows the typical tensile curve of as-printed Al-15.6Er-3.3Mg-0.6Mn-0.5Sc-0.4Zr bulk alloy prepared in Example 10.
Figure 25 shows the typical tensile curve of as-printed Al-15.6Er-7.8Mg-0.6Mn-0.7Zr bulk alloy prepared in Example 11.
Figure 26 shows the typical tensile curve of as-printed Al-14.6Er-7.8Mg-0.6Mn-0.5Sc-0.4Zr bulk alloy prepared in Example 12.
Figure 27 shows the typical tensile curve of as-printed Al-5.0Er-4.5Mg-0.6Mn-0.3Zr bulk alloy prepared in Example 13.
Figure 28 shows the typical tensile curve of as-printed Al-5.5Er-4.5Mg-0.6Mn-0.5Sc-0.4Zr bulk alloy prepared in Example 14.
Figure 29 shows the typical tensile curve of as-printed Al-5.0Er-3.0Mg-0.6Mn-0.7Zr bulk alloy prepared in Example 15.
Figure 30 shows the typical tensile curve of as-printed Al-5.0Er-3.0Mg-0.6Mn-0.5Sc-0.4Zr bulk alloy prepared in Example 16.
Figure 31 shows the typical tensile curve of as-printed Al-5.2Er-8.5Mg-0.6Mn-0.7Zr bulk alloy prepared in Example 17.
Figure 32 shows the typical tensile curve of as-printed Al-5.2Er-8.5Mg-0.6Mn-0.5Sc-0.4Zr bulk alloy prepared in Example 18.
Figure 33 shows the typical tensile curve of as-printed Al-10.8Er-4.5Mg-0.6Mn bulk alloy prepared in Example 19.
Figure 34 shows the typical tensile curve of as-printed Al-5.5Er-4.5Mg-0.6Mn-0.1Zr bulk alloy prepared in Example 20.
Figure 35 shows the typical tensile curve of as-printed Al-7Er-4.5Mg-0.5Mn-0.3Zr bulk alloy prepared in Example 21.
Figure 36 compares the microstructure of selective laser-printed Al-3Er-4.5Mg-0.5Mn-0.1Zr bulk material in Example 1.

### Detailed Description

### I. Definitions

In the present disclosure, unless otherwise specified, the scientific and technical terms used herein are intended to have the meanings commonly understood by those skilled in the art. Furthermore, the relevant terms and laboratory procedures used in this document are widely used terms and conventional procedures within the respective field. Meanwhile, in order to better understand the present disclosure, definitions and explanations of relevant terms are provided below.

As used herein, unless otherwise specified, the term "about" or "approximately" refers to within plus or minus 10% of a given value or range. In cases where integers are required, the term refers to rounding up or down to the nearest whole number within plus or minus 10% of a given value or range.

In the descriptions herein, references to "some examples", "some embodiments", or "some implementation solutions" are understood to denote subsets of all possible examples. However, it should be understood that "some examples" may represent the same or different subsets of all possible examples, and can be combined with each other without conflict.

As used herein, unless otherwise specified, terms such as "comprise", "include", "have", "contain", and their grammatical equivalents are typically understood as open-ended and non-exclusive, for example, not excluding other elements or steps not listed.

As used herein, the term "wt%" denotes a weight ratio and the proportion of a substance in a mixture. For example, 4-20 wt% erbium (Er) indicates that the erbium element accounts for 4-20 wt% of the total weight of the elements in the alloy.

As used herein, the term "nominal composition" refers to the proportion of each metal element in the total raw materials by weight, as initially added.

As used herein, the term "aluminum alloy" refers to an alloy based on aluminum with a certain amount of other alloying elements added.

As used herein, the term "9R phase" refers to a long-period lattice structure composed of 9 {111} atomic layers, containing three stacking faults, typically only found in face-centered cubic (FCC) structures.

As used herein, the term "twinning" refers to a mirror-symmetrical orientational relationship between two crystals (or two parts of a single crystal) along a common crystallographic plane. In the present disclosure, twinning in Al-Er alloys can coordinate plastic deformation and change the orientation of grains, thereby improving the plasticity and ductility of the alloy. In engineering alloys, introducing more twin boundaries is generally considered to significantly enhance the service life of the alloy. However, for some alloys, such as polycrystalline nickel-based superalloys, twin boundaries are more likely to induce the initiation and propagation of cracks, which may affect the performance of the alloy (DOI:10.1038/s41467-020-18641-z). The control and optimization of twinning are important considerations in alloy design and processing.

As used herein, the term "Additive Manufacturing" (AM) refers to any process that produces a three-dimensional object and includes the step of sequentially forming one layer of the object at a time. For example, AM processes include 3D printing (3DP) processes, laser net shape manufacturing, direct metal laser sintering (DMLS), direct metal laser melting (DMLM), plasma transfer arc, freeform fabrication, etc. Non-restrictive specific types of AM processes use energy beams, such as electron beams or electromagnetic radiation like lasers, to sinter or melt powder materials. AM processes can use metal powder materials or wires as raw materials.

### II. Examples

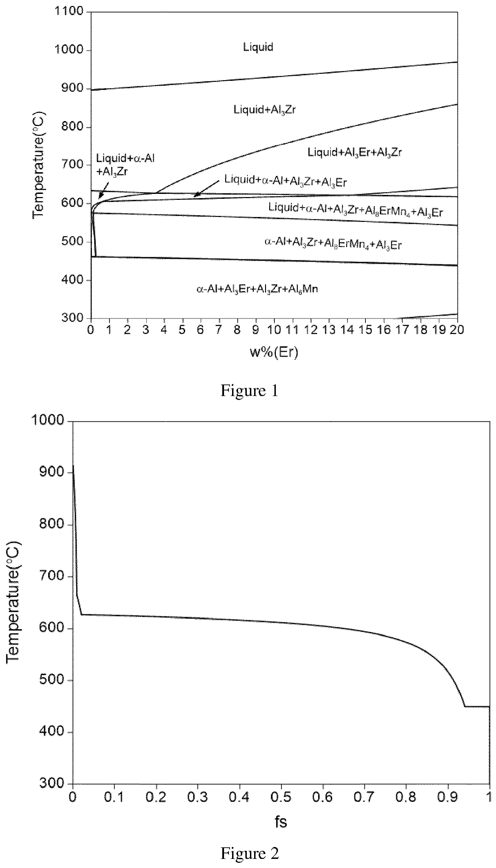

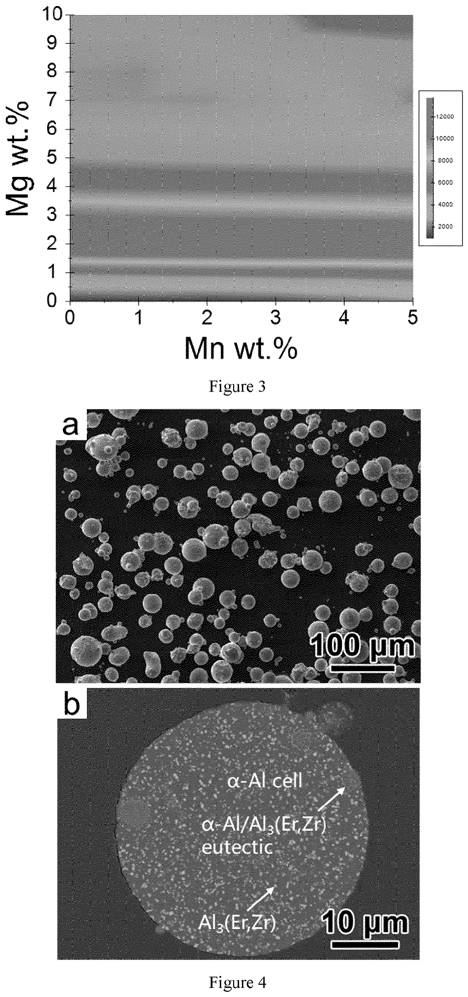

Elemental analysis of the alloy in the present disclosure is performed using an Inductively Coupled Plasma Optical Emission Spectrometer (ICP-OES), based on which the weight percentages of the respective elements are calculated. Yield strength, tensile strength, and elongation are determined according to ASTM E8/E8M-2015a, the Standard Test Methods for Tension Testing of Metallic Materials. Alloy compositions are designed with the aid of phase diagram calculation methods to achieve higher phase stability and mechanical properties, resulting in a thermodynamic equilibrium phase diagram for the Al-Er-Mg-Mn-Zr system as shown in Figure 1. The eutectic point w(Er) is approximately 4%, and hyper-eutectic compositions are selected to obtain a divorced eutectic network structure. High-throughput Scheil solidification path simulations of the Al-Er-Mg-Mn-Zr system are performed using phase diagram thermodynamic calculation methods, producing curves of solid fraction (fs) versus temperature T as depicted in Figure 2. The Critical Strain Index (CSI) is defined as the maximum value of |d*T*/d(*f*ₛ)^{1/2}| within *f*ₛ^{1/2}< 0.99. The trends of the hot cracking sensitivity index for the Al-Er-Mg-Mn system as a function of Mg and Mn content are shown in Figure 3. The CSIs of commercially used additive manufacturing aluminum alloys are all less than 10,000 K, which serves as a reference for optimizing the chemical composition of the Al-Er-Mg-Mn-Sc-Zr alloy powder: 4≤w(Er)≤20%; 3≤ w(Mg)≤10%; 0<w(Mn)≤1%; 0≤w(Sc)≤1%; 0≤w(Zr)≤1%; balanced with Al.

The present disclosure provides an aluminum-erbium alloy and preparation method thereof, and the additive manufacturing components made therefrom exhibit low hot cracking sensitivity, as well as high yield strength and good plasticity.

One aspect of the present disclosure provides an aluminum alloy, which contains: 4-20 wt% erbium (Er); 2-10 wt% magnesium (Mg); and less than or equal to 1 wt% manganese (Mn).

Optionally, the aluminum alloy also contains 0-1 wt% scandium (Sc).

Optionally, the aluminum alloy also contains 0-1 wt% zirconium (Zr).

In one embodiment, the aluminum alloy contains 4.0-20wt% Er, which may be such as 5.0-15.6wt%, 5.0-10.8 wt%, 10.8-14.6 wt%, 10.8-15.6 wt%, and further may be 4.5 wt%, 5.0 wt%, 5.2 wt%, 5.3 wt%, 5.5 wt%, 6.0 wt%, 6.5 wt%, 7.0 wt%, 7.5 wt%, 8.0 wt%, 8.5 wt%, 9.0 wt%, 9.5 wt%, 10.0 wt%, 10.5 wt%, 10.8 wt%, 11.0 wt%, 11.5 wt%, 12.0 wt%, 12.5 wt%, 13.0 wt%, 13.5 wt%, 14 wt%, 14.5 wt%, 14.6 wt%, 15.0 wt%, 15.6 wt%, 16.0 wt%, 16.5 wt%, 17.0 wt%, 17.5 wt%, 18.0 wt%, 18.5 wt%, 19.0 wt%, 19.5 wt%, 20.0 wt%, or any range in between, aiding in the manufacture of aluminum alloy products containing Er and having an eutectic structure. When the alloy powder is conventionally printed into bulk material, based on the Al-Er eutectic system, the Al₃Er phase not only participates in the eutectic reaction to provide excellent solidification characteristics but also precipitates as a coherent primary phase, acting for grain refining and further enhancing hot cracking resistance.

In one embodiment, the aluminum alloy contains 3.0-10 wt% Mg, which may be such as 3.0-8.5 wt%, 3.0-3.3 wt%, 3.3-4.5 wt%, 4.5-7.8 wt%, 7.8-8.5 wt%, and further may be 3.0 wt%, 3.3 wt%, 3.5 wt%, 4.5 wt%, 4.0 wt%, 4.5 wt%, 5.0 wt%, 5.5 wt%, 6.0 wt%, 6.5 wt%, 7.0 wt%, 7.5 wt%, 7.8 wt%, 8.0 wt%, 8.5 wt%, 9.0 wt%, 9.5 wt%, 10.0 wt%, or any range in between.

In one embodiment, the aluminum alloy contains less than or equal to 1 wt% Mn, such as less than or equal to 0.9 wt%, less than or equal to 0.8 wt%, less than or equal to 0.7 wt%, less than or equal to 0.6 wt%, 0.3-0.6 wt%, or ranges from 0.3 wt%, 0.4 wt%, 0.5 wt%, 0.6 wt%, 0.7 wt%, or any range in between.

The aluminum alloy optionally contains 0-1 wt% Zr, and further contains 0-0.7 wt% Zr, which may be such as 0 wt%, 0.1 wt%, 0.2 wt%, 0.3 wt%, 0.4wt%, 0.5 wt%, 0.6 wt%, 0.7 wt%, 0.8 wt%, 0.9 wt%, 1.0 wt%, or any range in between.

The aluminum alloy optionally contains 0-1 wt% Sc, and further contains 0-0.5 wt% Sc, which may be such as 0 wt%, 0.1 wt%, 0.2 wt%, 0.3 wt%, 0.4wt%, 0.5 wt%, 0.6 wt%, 0.7 wt%, 0.8 wt%, 0.9 wt%, 1.0 wt%, or any range in between.

In one embodiment, the aluminum alloy contains:
10.8wt% Er, 4.5 wt% Mg, 0.6 wt% Mn, 0.7 wt% Zr; or,
10.8 wt% Er, 4.5 wt% Mg, 0.6 wt% Mn, 0.5 wt% Sc, 0.4 wt% Zr; or,
10.8 wt% Er, 3.0 wt% Mg, 0.6 wt% Mn, 0.7 wt% Zr; or,
10.8 wt% Er, 3.0 wt% Mg, 0.6 wt% Mn, 0.5 wt% Sc, 0.4 wt% Zr; or,
10.8 wt% Er, 8.5 wt% Mg, 0.6 wt% Mn, 0.7 wt% Zr; or,
10.8 wt% Er, 8.5 wt% Mg, 0.6 wt% Mn, 0.5 wt% Sc, 0.4 wt% Zr; or,
15.6 wt% Er, 4.5 wt% Mg, 0.6 wt% Mn, 0.7 wt% Zr; or,
15.6 wt% Er, 4.5 wt% Mg, 0.6 wt% Mn, 0.5 wt% Sc, 0.4 wt% Zr; or,
15.6 wt% Er, 3.3 wt% Mg, 0.6 wt% Mn, 0.7 wt% Zr; or,
15.6 wt% Er, 3.3 wt% Mg, 0.6 wt% Mn, 0.5 wt% Sc, 0.4 wt% Zr; or,
15.6 wt% Er, 7.8 wt% Mg, 0.6 wt% Mn, 0.7 wt% Zr; or,
14.6 wt% Er, 7.8 wt% Mg, 0.6 wt% Mn, 0.5 wt% Sc, 0.4 wt% Zr; or,
5.0 wt% Er, 4.5 wt% Mg, 0.6 wt% Mn, 0.3 wt% Zr; or,
5.5 wt% Er, 4.5 wt% Mg, 0.6 wt% Mn, 0.5 wt% Sc, 0.4 wt% Zr; or,
5.0 wt% Er, 3.0 wt% Mg, 0.6 wt% Mn, 0.7 wt% Zr; or,
5.0 wt% Er, 3.0 wt% Mg, 0.6 wt% Mn, 0.5 wt% Sc, 0.40 wt% Zr; or,
5.2 wt% Er, 8.5 wt% Mg, 0.6 wt% Mn, 0.7 wt% Zr; or,
5.2 wt% Er, 8.5 wt% Mg, 0.6 wt% Mn, 0.50 wt% Sc, 0.4 wt% Zr; or,
10.8 wt% Er, 4.5 wt% Mg, 0.6 wt% Mn; or,
5.5 wt% Er, 4.5 wt% Mg, 0.6 wt% Mn, 0.1wt% Zr; or,
7.0 wt% Er, 4.5 wt% Mg, 0.5 wt% Mn, 0.3 wt% Zr, 0.1 wt% Sc.

In one embodiment, the aluminum alloy also contains aluminum (Al) as the remainder, and unavoidable impurities. In one embodiment, the prepared form of the aluminum alloy is selected from the group consisting of: powder, slice, strip, wire, sheet, plate, and foil. In one embodiment, the alloy is manufactured into a powder form, which can be used in an additive manufacturing method.

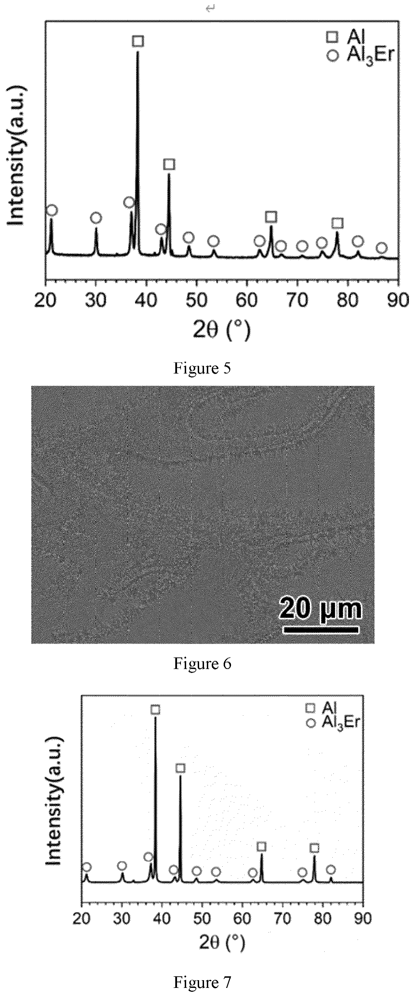

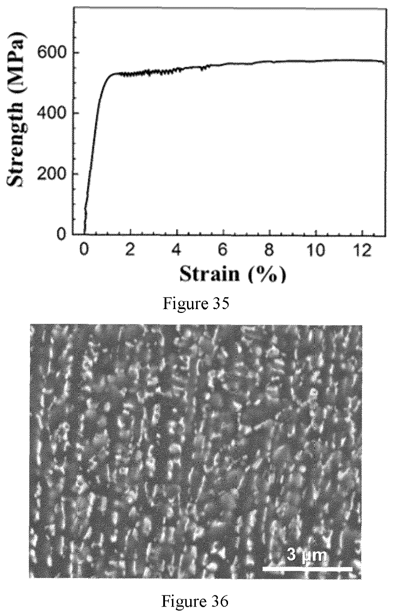

As an example, Figures 4 and 5 illustrate exemplary aluminum alloy powder of the present disclosure (10.8 wt% Er, 4.5 wt% Mg, 0.6 wt% Mn, 0.7 wt% Zr), in which the average particle size of the aluminum alloy powder is about 35 µm. The powder contains two phases, α-Al and Al₃Er, with α-Al cells interspersed with α-Al/Al₃Er eutectics. When the aluminum alloy content is below 4 wt%, for example at 3 wt%, the microstructure of the alloy obtained is as shown in Figure 36, where the Al₃Er network structure is discontinuous.

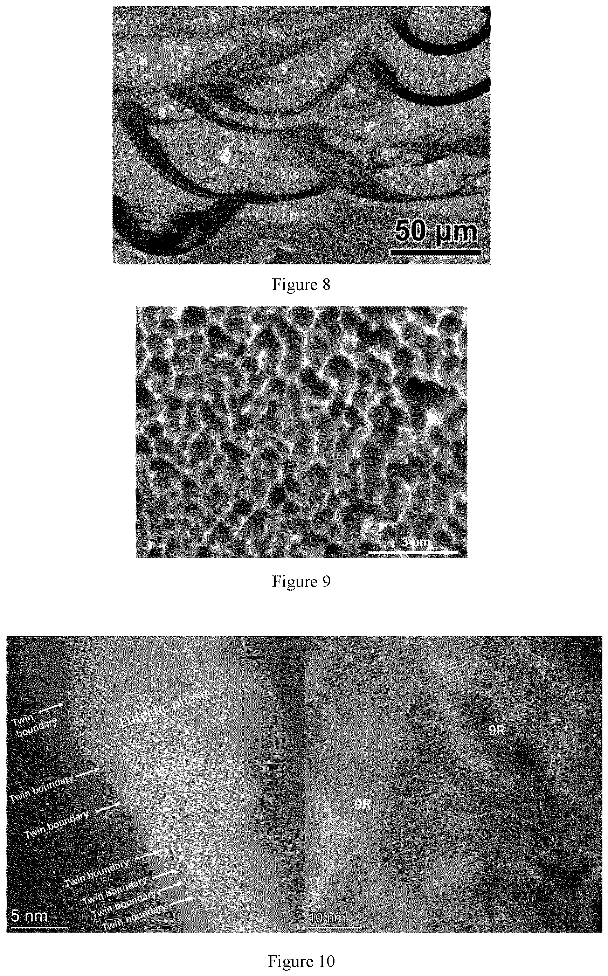

The atomic structure of the Al₃Er eutectic phase is further shown in Figure 10, presenting a continuous cellular FCC configuration along with the 9R phase. The FCC crystal configuration of the Al₃Er eutectic phase is coherent with the aluminum matrix, facilitating coordinated deformation therebetween.

Figure 6 shows an exemplary as-printed alloy, optionally obtained by processing alloy powders through conventional aluminum alloy Selective Laser Melting (SLM). The alloy is free from cracks, and the bottom of the melt pool contains a large number of Al₃(Er,Zr) nucleating phases, inducing the formation of equiaxed grains with a size of about 500 nm, while the internal columnar grain region of the melt pool has a grain size of about 2 µm. Figure 9 further shows a large number of cellular continuous Al₃Er eutectic network structures contained in the columnar grains.

The yield strength of the as-printed alloy reaches over 440 MPa, the tensile strength exceeds 550 MPa, and the elongation is greater than 5%. At lower erbium contents, the yield strength of the as-printed alloy is below 400 MPa, and the tensile strength is below 470 MPa.

In one embodiment, the alloy exhibits a dual grain morphology with coexisting columnar grains and equiaxed grains. At the bottom of the melt pool of the as-printed alloy, there are a large number of Al₃(Er,Zr) nucleating phases, inducing the formation of equiaxed grains with a size of about 500 nm, while the internal columnar grain region of the melt pool has a grain size of about 2 µm.

Furthermore, the alloy is rich in fine-grained structures. The proportion of equiaxed fine grains in the disclosed Al-Er alloy is significantly higher than that in Al-Ni system alloys, showing superior solidification characteristics. Compared to Al-Ni system 3D printed materials reported in the literature (Scripta Materialia 203 (2021): 114034.), the Al₃Er phase not only participates in the eutectic reaction providing excellent solidification characteristics but also precipitates as a coherent primary phase, acting for grain refining and further enhancing hot cracking resistance. In the Al-Ni system, Al₃Ni, due to its significantly different crystal structure from the aluminum matrix, does not effectively serve for the effects of heterogeneous nucleation or grain refining. The proportion of equiaxed fine grains in various examples of the disclosed Al-Er alloy is significantly higher than in Al-Ni system alloys, displaying superior solidification characteristics.

In one embodiment, the alloy has a grain size between 500 nm and approximately 2 µm. In one embodiment, the alloy possesses a fine-grained microstructure with grain sizes between 500 nm and approximately 2 µm.

In one embodiment, the alloy consists of equiaxed grains with an approximate size of 500 nm and columnar grains with a diameter of 2 µm.

In one embodiment, the columnar grains contain a continuous network of Al₃Er cellular eutectic structure.

In one embodiment, within the network structure, the network cell sizes range from 300-400 nm. This eutectic phase (and the network structure it composes) has the capability for plastic deformation, which is beneficial for enhancing the plasticity of the material.

In one embodiment, the Al₃Er cellular eutectic network structure includes twinning structure, which is nanotwin.

In one embodiment, the Al₃Er cellular eutectic network structure includes 9R structure, wherein the 9R structure is a periodic stacking fault structure with triple closely packed atomic planes as intervals.

In the present disclosure, the alloy in powder form can be manufactured through any suitable method.

In one embodiment, the powder is produced by a process that involves the disintegration of the melt followed by solidification.

In some embodiments, the aluminum alloy powder is manufactured using a method that provides a sufficient solidification rate to promote the formation of a fine eutectic structure.

Another aspect of the present disclosure provides a method for preparing the aforementioned aluminum alloy, which includes:
Preparing the aluminum alloy via a rapid solidification process; the rapid solidification process is preferably selected from one or more of gas atomization, spray deposition, continuous casting, melt spinning, melt extraction, and beam glazing.

In one embodiment, the atomization powdering process includes, but is not limited to, gas atomization, rotating electrode atomization, and ultrasonic atomization.

Although the present disclosure primarily pertains to aluminum alloy products manufactured through powder-based additive manufacturing methods, in some examples, one or more of the aluminum alloy compositions can also be used in wire-based additive manufacturing methods. For example, wire-based additive manufacturing methods utilizing electron beams and/or plasma arcs can be employed.

In one embodiment, the additive manufacturing includes, but is not limited to, Laser Selective Melting Additive Manufacturing, Laser Directed Energy Deposition Additive Manufacturing, Electron Beam Selective Melting Additive Manufacturing, and Electron Beam Directed Energy Deposition Additive Manufacturing.

In one embodiment, the method for preparing the aforementioned aluminum alloy includes: smelting to produce an aluminum-erbium alloy preformed ingot and obtaining aluminum-erbium alloy powder via gas atomization powdering.

In one embodiment, the preparation of the aluminum-erbium alloy preformed ingot includes the following steps:
S1: according to the weight percentage of the alloy composition, weighing pure Al, pure Mg, Al-Er master alloy block, and Al-Mn master alloy block as raw materials, optionally, the raw materials include Al-Sc master alloy block and/or Al-Zr master alloy block;
S2: mixing pure Al and Al-Er master alloy block, heating to melt and stirring to obtain melt A;
S3: adding Al-Mn master alloy block into melt A, heating and stirring to obtain melt B;
   when the aluminum-erbium alloy contains Sc, additionally adding Al-Sc master alloy block to melt A; when the aluminum-erbium alloy contains Zr, additionally adding Al-Zr master alloy block to melt A;
S4: pressing pure Mg into melt B to obtain melt C;
S5: adding refining agents and covering agents to the melt obtained in step S4 and degassing under vacuum to obtain melt D;
S6: removing slag from melt D and casting into a preheated mold to obtain a metal ingot.

In one embodiment, the heating temperature in step S2 is 780-800°C, with a stirring period of 1-3 minutes.

In one embodiment, the heating temperature in step S3 is 780-800°C, with a stirring period of 1-3 minutes.

In one embodiment, the heating temperature in step S4 is 700-740°C, with a stirring period of 1-3 minutes.

In one embodiment, the vacuum furnace temperature in step S5 is at 740°C, with a degassing period of 5-10 minutes.

In one embodiment, the mold preheating temperature in step S6 is 200-250°C.

In one embodiment, atomization forming includes the following steps:
A1: Heating and melting the aluminum-erbium alloy preformed ingot in a vacuum environment.
A2: Allowing the molten melt to flow under gravity, breaking the effluent melt into droplets of various sizes under the impact of atomized nitrogen gas, with droplets solidifying into powder on the way down, and collecting to obtain a high-strength aluminum-erbium alloy powder.

As an embodiment, the heating in step A1 involves heating by electromagnetic induction, with a heating temperature of 750-800°C and a hold time of 0.5-0.8 h.

As an embodiment, step A1 is specifically:
a. Placing the aluminum-erbium alloy preformed ingot in a graphite crucible within a smelting chamber, closing the chamber furnace door, reducing the vacuum level inside the smelting chamber using a vacuum system, then introducing nitrogen gas to further displace the air inside, reducing the oxygen content in the chamber;
b. Heating the chamber by electromagnetic induction to completely melt the ingot.

As an embodiment, step A2 additionally involves vacuum packaging the collected powder after collecting the powder.

In some specific examples, aluminum-erbium alloy powder for additive manufacturing is prepared using gas atomization powdering, with the steps as follows:

### (1) Raw Material Preparation:

Preparing the blend according to the chemical composition and mass percentage formulation of the Al-Er-Mg-Mn-Sc-Zr alloy powder used for additive manufacturing.

Utilizing pure Al as the Al source material, Al-20Er master alloy as the Er source material, pure Mg as the Mg source material, Al-10Mn master alloy as the Mn source material, Al-10Sc master alloy as the Sc source material, and Al-10Zr master alloy as the Zr source material.

Weighing pure Al, pure Mg, Al-20Er master alloy block, Al-10Mn master alloy block, Al-10Sc master alloy, and Al-10Zr master alloy block as raw materials. Based on the recovery rates of Mg, Sc, and Zr at 95%, additionally weighing pure Mg and Al-10Zr master alloy block as supplemental raw material to compensate for the burn-off during processing.

### (2) Smelting of Al-Er-Mg-Mn-Sc-Zr Alloy Preformed ingot:

a. Mixing pure Al, pure Mg, and Al-20Er master alloy block and placing them in a graphite crucible, heating in a resistance furnace to 780-800°C until melting, then stirring with a graphite rod for 3 minutes.
b. Adding Al-10Mn and Al-10Zr master alloy blocks to the melt, stirring with a graphite rod for 3 minutes.

Adding Al-10Sc master alloy block to the melt when the aluminum-erbium alloy contains Sc.
c. Adding pure Mg to the melt, pressing it to the bottom of the melt using a graphite rod to dissolve.
d. Adding refining agents for conducting refining, then skimming off surface slag, sprinkling covering agents, and performing vacuum degassing for 5-10 minutes.
e. Skimming off surface slag, casting into a cylindrical mold preheated to 250°C, obtaining a cylindrical ingot.
f. Removing the oxide layer from the surface of the cast ingot using mechanical machining methods.

### (3) Atomization of Al-Er-Mg-Mn-Sc-Zr Alloy Powder:

a. Placing the Al-Er-Mg-Mn-Sc-Zr preformed ingot in a graphite crucible within the smelting chamber, closing the chamber furnace door, reducing the vacuum level inside the smelting chamber using a vacuum system, then introducing nitrogen gas to further displace the air inside, reducing the oxygen content in the chamber.
b. Heating the chamber by electromagnetic induction to the target temperature of 750-800°C, maintaining the temperature for 0.5 h, completely melting the ingot.
c. Allowing the molten melt to flow along the nozzle under gravity, breaking into droplets of various sizes under the impact of fast-moving atomized nitrogen gas, solidifying into powder on the way down, and collecting the falling powder at the bottom of the chamber.
d. Vacuum packaging the collected powder to prevent oxidation of the powder.

Another aspect of the present disclosure provides an additive manufacturing component made from the gas atomized powder of the aluminum alloy.

In one embodiment, the yield strength of the component is greater than 440 MPa, further greater than 500 MPa or 550 MPa, and even greater than 600 MPa.

In one embodiment, the tensile strength of the component is greater than 550 MPa, further greater than 600 or 650 MPa, and even greater than 700 MPa.

In one embodiment, the elongation of the component is greater than 4%, even greater than 6%, 8%, or 10%, and even greater than 12%.

After manufacturing the final additive manufacturing product, one or more heat treatments at one or more temperatures can be optionally undergone.

In one embodiment, after being maintained at 250-350°C for 5-40 minutes, the component has a yield strength greater than 580 MPa, a tensile strength greater than 630 MPa, and an elongation greater than 8%.

Another aspect of the present disclosure provides a method for manufacturing components, including:
Manufacturing the powder form of the aluminum alloy;
Using the powder form in an additive manufacturing process to manufacture the component.

To make the objectives, technical solutions, and advantages of the present disclosure clearer, the disclosure will be further described in detail as follows, with the described examples not intended to limit the scope of the present disclosure. All other examples obtained by those of ordinary skill in the art without creative efforts fall within the scope of protection of the present disclosure.

Before further detailing the examples of the present disclosure, the nouns and terms involved in the examples of the present disclosure are explained. The nouns and terms involved in the examples of the present disclosure are applicable to the following interpretations.

All raw materials and equipment used in the specific embodiments of the present disclosure are known products, obtained by purchasing commercially available products.

### Example 1

In the chemical composition range of the Al-Er-Mg-Mn-Sc-Zr alloy, Al-10.8Er-4.5Mg-0.6Mn-0.7Zr was selected as the nominal composition for powder preparation. The weight percentages of the elements in the powder form of the alloy product were: Er 10.8%, Mg 4.5%, Mn 0.6%, Zr 0.7%, with the remainder being Al and unavoidable impurities. The preparation steps were as follows:
(1) Raw Material Preparation:
   Pure Al (14.25 kg), pure Mg (2.25 kg), Al-20Er master alloy block (27 kg), Al-10Mn master alloy block (3 kg), and Al-10Zr master alloy block (3.50 kg) were weighed as raw materials. Based on the recovery rates of Mg and Zr at 95%, additional pure Mg (0.12 kg) and Al-10Zr master alloy block (0.18 kg) were weighed as supplemental raw material to compensate for the burn-off during processing.
(2) Smelting of the Al-Er-Mg-Mn-Zr Alloy Preformed ingot:
   a. Pure Al, pure Mg, and the Al-20Er master alloy block were mixed and placed into a graphite crucible. The mixture was heated in a resistance furnace to 780°C, melted, and then stirred with a graphite rod for 3 minutes.
   b. The Al-Mn and Al-Zr master alloy blocks were added to the melt, and stirred with a graphite rod for 3 minutes.
   c. Pure Mg was added to the melt and pressed into the bottom of the melt using a graphite rod to dissolve.
   d. Refining agents were added, surface slag was skimmed off, covering agents were sprinkled, and the mixture was degassed under vacuum for 10 minutes.
   e. Surface slag was removed, and the melt was cast into a cylindrical mold preheated to 250°C, resulting in a cylindrical ingot.
   f. The oxide layer on the surface of the cast ingot was removed using mechanical machining methods.
(3) Atomization of the Al-Er-Mg-Mn-Zr Alloy Powder:
   a. The Al-Er-Mg-Mn-Sc-Zr preformed ingot was placed in a graphite crucible within the smelting chamber, the chamber furnace door was closed, and the vacuum level inside the schamber was reduced using a vacuum system. Nitrogen gas was then introduced to further displace the air inside and reduce the oxygen content in the chamber.
   b. The chamber was heated by electromagnetic induction to a target temperature of 800°C, maintained for 0.5 h, ensuring the ingot was completely melted.
   c. The molten melt was flowed under gravity through the nozzle and was shattered into droplets of varying sizes by the impact of fast-moving atomized nitrogen gas. The droplets solidified into powder on the way down, and the powder was collected at the bottom of the chamber.
   d. The collected powder was vacuum-packaged to prevent oxidation of the powder.

An Inductively Coupled Plasma Optical Emission Spectrometer was used to confirm that the composition of the Al-Er-Mg-Mn-Zr powder produced in this example matched the designed nominal values of Al-10.8Er-4.5Mg-0.6Mn-0.7Zr.

The typical particle morphology and microstructure of the Al-10.8Er-4.5Mg-0.6Mn-0.7Zr powder produced in this example are shown in Figure 4, and the typical XRD spectrum is shown in Figure 5. The powder prepared for SLM had an average particle size of about 35 µm with high sphericity. The powder contained two phases, α-Al and Al₃(Er,Zr), with α-Al cells interspersed with α-Al/Al₃Er eutectics.

The Al-10.8Er-4.5Mg-0.6Mn-0.7Zr powder prepared in this example was processed using the conventional aluminum alloy Selective Laser Melting (SLM) process to produce as-printed Al-10.8Er-4.5Mg-0.6Mn-0.7Zr alloy bulk material. The typical microstructure of solidification is shown in Figure 6, the typical XRD spectrum is shown in Figure 7, and the electron backscatter photograph of the grain structure are shown in Figure 8. No cracks were formed in the Al-10.8Er-4.5Mg-0.6Mn-0.7Zr alloy prepared by the SLM technology, and no significant presence of porosity was observed, with the grain structure being fine. A large number of Al₃(Er,Zr) nucleating phases were present at the bottom of the melt pool, inducing the formation of equiaxed grains with a size of approximately 500 nm, while the internal columnar grain region of the melt pool had a grain size of about 2 µm. Compared to the Al-Ni system 3D printed materials reported in the literature (Scripta Materialia 203 (2021): 114034.), the Al₃Er phase not only participated in the eutectic reaction providing excellent solidification characteristics but also precipitated as a coherent primary phase, acting to refine the grains and further enhance hot cracking resistance. The Al₃Ni in the Al-Ni system, due to its significant structural difference from the aluminum matrix, did not effectively serve for the effects of heterogeneous nucleation or grain refinement. Therefore, by comparing the microstructures, it was confirmed that the proportion of equiaxed fine grains in the disclosed Al-Er alloy examples was significantly higher than that in Al-Ni system alloys, exhibiting superior solidification characteristics.

As a notable feature, the columnar grains contained a continuous Al₃Er cellular eutectic network structure, with network cell sizes of 300-400 nm, as shown in Figure 9. The Al₃Er eutectic phase composing this network structure contained numerous nanotwins and 9R structures, as shown in Figure 10, indicating that the eutectic phase (and the network structure it composes) had the capability for plastic deformation, which was beneficial for enhancing the material's plasticity. Moreover, Al₃Er, being an FCC structure and coherent with the aluminum matrix, facilitated coordinated deformation between the two. These characteristics of the Al₃Er phase were in stark contrast to the low-coherency brittle eutectic phases (Si, Al₁₃Fe₄, Al₃Ni, Al₁₁La₃, Al₁₁Ce₃) found in other eutectic systems such as Al-Si, Al-Fe, Al-Ni, Al-La, Al-Ce.

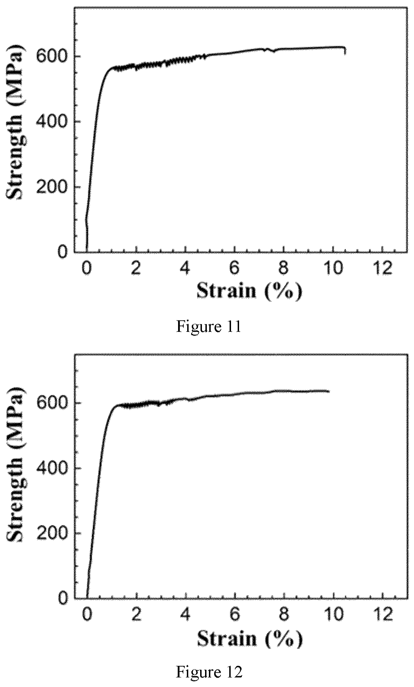

The as-printed Al-10.8Er-4.5Mg-0.6Mn-0.7Zr alloy bulk material was subjected to a tensile test according to the ASTM E8/E8M-2015a standard, and it was measured that the yield strength was 540 MPa, the tensile strength was 610 MPa, and the elongation was 11.8%, with the tensile curve shown in Figure 11.

The as-printed Al-10.8Er-4.5Mg-0.6Mn-0.7Zr alloy bulk material was maintained at 320°C for 25 minutes and then subjected to a tensile test, and the yield strength was measured to be 591 MPa, the tensile strength to be 638 MPa, and the elongation to be 9.8%, with the tensile curve shown in Figure 12. The Al-10.8Er-4.5Mg-0.6Mn-0.7Zr alloy prepared in this example exhibited excellent solidification characteristics and mechanical properties.

### Example 2

In the chemical composition range of the Al-Er-Mg-Mn-Sc-Zr alloy, Al-10.8Er-4.5Mg-0.6Mn-0.5Sc-0.4Zr was selected as the nominal composition for powder preparation. The preparation steps were as follows:
(1) Raw Material Preparation:
   Pure Al (13.25 kg), pure Mg (2.25 k g), Al-20Er master alloy block (27 kg), Al-10Mn master alloy block (3 kg), Al-10Sc master alloy block (2.50 kg), and Al-10Zr master alloy block (2 kg) were weighed as raw materials. Based on the recovery rates of Mg, Sc, and Zr at 95%, additional pure Mg (0.12 kg), Al-10Sc master alloy block (0.13 kg), and Al-10Zr master alloy block (0.10 kg) were weighed as supplemental raw material to compensate for the burn-off during processing.
(2) Smelting of the Al-Er-Mg-Mn-Zr Alloy Preformed ingot:
   a. Pure Al, pure Mg, and the Al-20Er master alloy block were mixed and placed into a graphite crucible. The mixture was heated in a resistance furnace to 780°C, melted, and then stirred with a graphite rod for 3 minutes.
   b. The Al-Mn, Al-Zr, and Al-Sc master alloy blocks were added to the melt, and stirred with a graphite rod for 3 minutes.
   c. Pure Mg was added to the melt and pressed into the bottom of the melt using a graphite rod to dissolve.
   d. Refining agents were added, surface slag was skimmed off, covering agents were sprinkled, and the mixture was degassed under vacuum for 10 minutes.
   e. Surface slag was removed, and the melt was cast into a cylindrical mold preheated to 250°C, resulting in a cylindrical ingot.
   f. The oxide layer on the surface of the cast ingot was removed using mechanical machining methods.
(3) The preparation steps were the same as in Example 1.

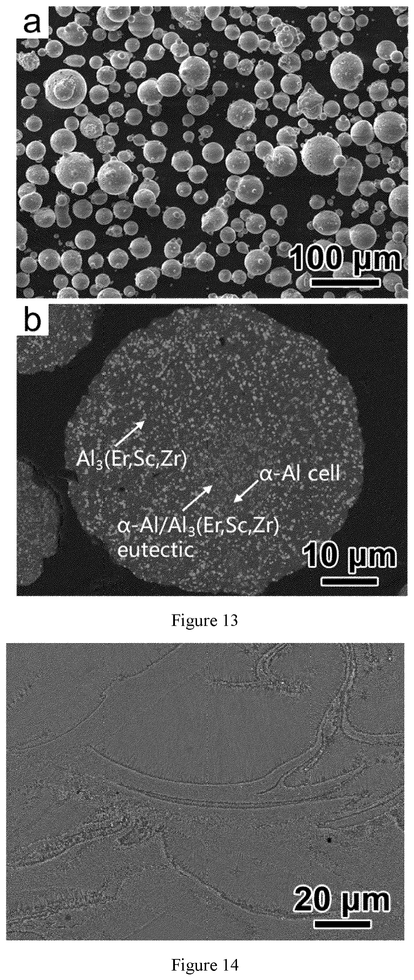

The typical particle morphology and microstructure of the Al-10.8Er-4.5Mg-0.6Mn-0.5Sc-0.4Zr powder produced in this example are shown in Figure 13. The powder prepared for SLM had an average particle size of about 36 µm with high sphericity. The powder contained two phases, α-Al and Al₃(Er,Zr).

The Al-10.8Er-4.5Mg-0.6Mn-0.5Sc-0.4Zr powder prepared in this example was processed using the conventional aluminum alloy Selective Laser Melting (SLM) process to produce Al-10.8Er-4.5Mg-0.6Mn-0.5Sc-0.4Zr alloy bulk material. The typical microstructure of solidification is shown in Figure 14. No cracks or significant porosity were present in this alloy, and the grain structure was similar to that of the alloy bulk material produced in Example 1, but both the eutectic cellular structures and the size of the ultrafine equiaxed grains were smaller, indicating that the addition of Sc enhanced the refining effect.

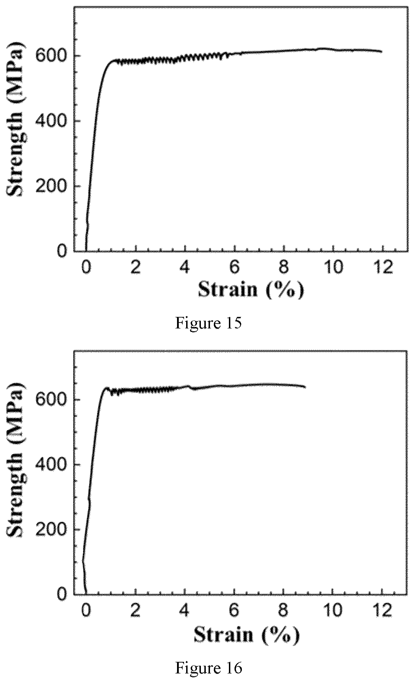

Using the test method from Example 1, the yield strength was measured to be 553 MPa, the tensile strength to be 622 MPa, and the elongation to be 12%, with the tensile curve shown in Figure 15. After maintaining the as-printed Al-10.8Er-4.5Mg-0.6Mn-0.5Sc-0.4Zr alloy bulk material at 350°C for 45 minutes and performing a tensile test, the yield strength was measured to be 630 MPa, the tensile strength to be 647 MPa, and the elongation to be 8.9%, exhibiting excellent performance, with the tensile curve shown in Figure 16.

### Example 3

In the chemical composition range of the Al-Er-Mg-Mn-Sc-Zr alloy, Al-10.8Er-3.0Mg-0.6Mn-0.7Zr was selected as the nominal composition for powder preparation. The preparation steps were as follows:

### (1) Raw Material Preparation:

Pure Al (15 kg), pure Mg (1.50 kg), Al-20Er master alloy block (27 kg), Al-10Mn master alloy block (3 kg), and Al-10Zr master alloy block (3.50 kg) were weighed as raw materials. Based on the recovery rates of Mg and Zr at 95%, additional pure Mg (0.10 kg) and Al-10Zr master alloy block (0.18 kg) were weighed as supplemental raw material to compensate for the burn-off during processing.

The preparation steps of (2) and (3) were the same as in Example 1.

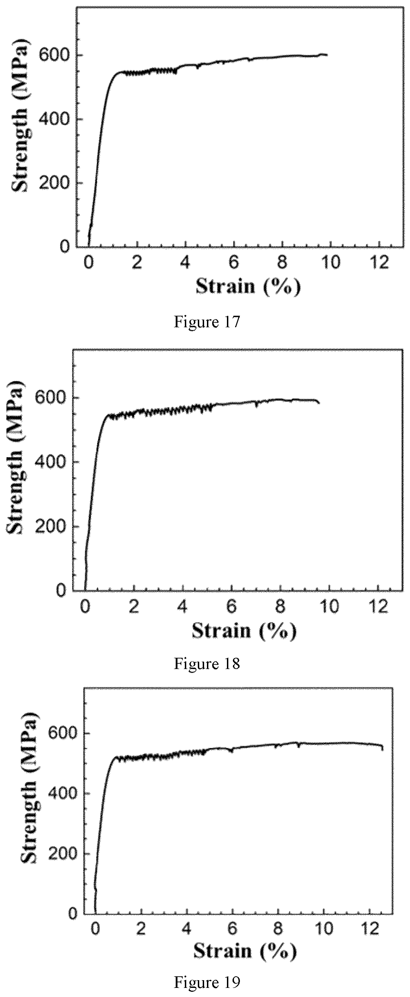

Using the test method from Example 1, the yield strength was measured to be 536 MPa, the tensile strength to be 602 MPa, and the elongation to be 9.8%, with the tensile curve shown in Figure 17.

### Example 4

In the chemical composition range of the Al-Er-Mg-Mn-Sc-Zr alloy, Al-10.8Er-3.0Mg-0.6Mn-0.5Sc-0.4Zr was selected as the nominal composition for powder preparation. The preparation steps were as follows:

### (1) Raw Material Preparation:

Pure Al (14 kg), pure Mg (1.50 kg), Al-20Er master alloy block (27 kg), Al-10Mn master alloy block (3 kg), Al-10Sc master alloy block (2.50 kg), and Al-10Zr master alloy block (2 kg) were weighed as raw materials. Based on the recovery rates of Mg, Sc, and Zr at 95%, additional pure Mg (0.10 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

Using the test method from Example 1, the yield strength was measured to be 538 MPa, the tensile strength to be 596 MPa, and the elongation to be 9.6%, with the tensile curve shown in Figure 18.

### Example 5

In the chemical composition range of the Al-Er-Mg-Mn-Sc-Zr alloy, Al-10.8Er-8.5Mg-0.6Mn-0.7Zr was selected as the nominal composition for powder preparation. The preparation steps were as follows:

### (1) Raw Material Preparation:

Pure Al (12.25 kg), pure Mg (4.25 kg), Al-20Er master alloy block (27 kg), Al-10Mn master alloy block (3 kg), and Al-10Zr master alloy block (3.50 kg) were weighed as raw materials. Based on the recovery rates of Mg and Zr at 95%, additional pure Mg (0.22 kg) and Al-10Zr master alloy block (0.18 kg) were weighed as supplemental raw material to compensate for the burn-off during processing.

The preparation steps of (2) and (3) were the same as in Example 1.

Using the test method from Example 1, the yield strength was measured to be 505 MPa, the tensile strength to be 569 MPa, and the elongation to be 12.6%, with the tensile curve shown in Figure 19.

### Example 6

In the chemical composition range of the Al-Er-Mg-Mn-Sc-Zr alloy, Al-10.8Er-8.5Mg-0.6Mn-0.5Sc-0.4Zr was selected as the nominal composition for powder preparation. The preparation steps were as follows:

### (1) Raw Material Preparation:

Pure Al (11.25 kg), pure Mg (4.25 kg), Al-20Er master alloy block (27 kg), Al-10Mn master alloy block (3 kg), Al-10Sc master alloy block (2.50 kg), and Al-10Zr master alloy block (2 kg) were weighed as raw materials. Based on the recovery rates of Mg, Sc, and Zr at 95%, additional pure Mg (0.22 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

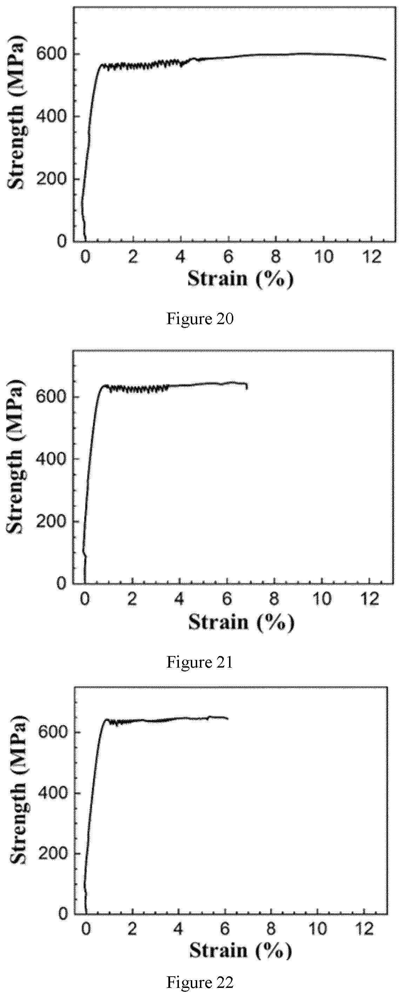

Using the test method from Example 1, the yield strength was measured to be 545 MPa, the tensile strength to be 601 MPa, and the elongation to be 12.6%, with the tensile curve shown in Figure 20.

### Example 7

In the chemical composition range of the Al-Er-Mg-Mn-Sc-Zr alloy, Al-15.6Er-4.5Mg-0.6Mn-0.7Zr was selected as the nominal composition for powder preparation. The preparation steps were as follows:

### (1) Raw Material Preparation:

Pure Al (2.25 kg), pure Mg (2.25 kg), Al-20Er master alloy block (39 kg), Al-10Mn master alloy block (3 kg), and Al-10Zr master alloy block (3.5 kg) were weighed as raw materials. Based on the recovery rates of Mg and Zr at 95%, additional pure Mg (0.12 kg) and Al-10Zr master alloy block (0.18 kg) were weighed as supplemental raw material to compensate for the burn-off during processing.

The preparation steps of (2) and (3) were the same as in Example 1.

Using the test method from Example 1, the yield strength was measured to be 629 MPa, the tensile strength to be 637 MPa, and the elongation to be 6.6%, with the tensile curve shown in Figure 21.

### Example 8

In the chemical composition range of the Al-Er-Mg-Mn-Sc-Zr alloy, Al-15.6Er-4.5Mg-0.6Mn-0.5Sc-0.4Zr was selected as the nominal composition for powder preparation. The preparation steps were as follows:

### (1) Raw Material Preparation:

Pure Al (1.25 kg), pure Mg (2.25 kg), Al-20Er master alloy block (39 kg), Al-10Mn master alloy block (3 kg), Al-10Sc master alloy block (2.5 kg), and Al-10Zr master alloy block (2 kg) were weighed as raw materials. Based on the recovery rates of Mg, Sc, and Zr at 95%, additional pure Mg (0.12 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

Using the test method from Example 1, the yield strength was measured to be 633 MPa, the tensile strength to be 647 MPa, and the elongation to be 4.5%, with the tensile curve shown in Figure 22.

### Example 9

In the chemical composition range of the Al-Er-Mg-Mn-Sc-Zr alloy, Al-15.6Er-3.3Mg-0.6Mn-0.7Zr was selected as the nominal composition for powder preparation. The preparation steps were as follows:

### (1) Raw Material Preparation:

Pure Al (2.85 kg), pure Mg (1.65 kg), Al-20Er master alloy block (39 kg), Al-10Mn master alloy block (3 kg), and Al-10Zr master alloy block (3.5 kg) were weighed as raw materials. Based on the recovery rates of Mg and Zr at 95%, additional pure Mg (0.10 kg) and Al-10Zr master alloy block (0.18 kg) were weighed as supplemental raw material to compensate for the burn-off during processing.

The preparation steps of (2) and (3) were the same as in Example 1.

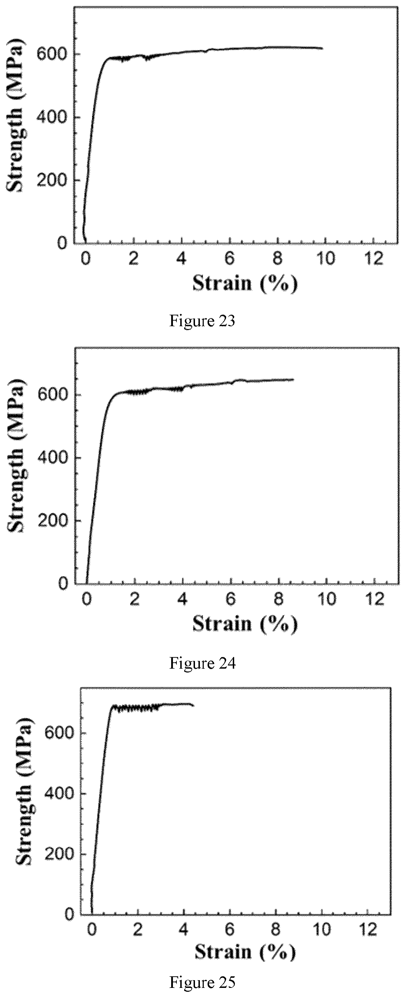

Using the test method from Example 1, the yield strength was measured to be 568 MPa, the tensile strength to be 623 MPa, and the elongation to be 9.9%, with the tensile curve shown in Figure 23.

### Example 10

In the chemical composition range of the Al-Er-Mg-Mn-Sc-Zr alloy, Al-15.6Er-3.3Mg-0.6Mn-0.5Sc-0.4Zr was selected as the nominal composition for powder preparation. The preparation steps were as follows:

### (1) Raw Material Preparation:

Pure Al (1.85 kg), pure Mg (1.65 kg), Al-20Er master alloy block (39 kg), Al-10Mn master alloy block (3 kg), Al-10Sc master alloy block (2.5 kg), and Al-10Zr master alloy block (2 kg) were weighed as raw materials. Based on the recovery rates of Mg, Sc, and Zr at 95%, additional pure Mg (0.10 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

Using the test method from Example 1, the yield strength was measured to be 586 MPa, the tensile strength to be 648 MPa, and the elongation to be 8.6%, with the tensile curve shown in Figure 24.

### Example 11

In the chemical composition range of the Al-Er-Mg-Mn-Sc-Zr alloy, Al-15.6Er-7.8Mg-0.6Mn-0.7Zr was selected as the nominal composition for powder preparation. The preparation steps were as follows:

### (1) Raw Material Preparation:

Pure Al (0.60 kg), pure Mg (3.90 kg), Al-20Er master alloy block (39 kg), Al-10Mn master alloy block (3 kg), and Al-10Zr master alloy block (3.5 kg) were weighed as raw materials. Based on the recovery rates of Mg and Zr at 95%, additional pure Mg (0.20 kg) and Al-10Zr master alloy block (0.18 kg) were weighed as supplemental raw material to compensate for the burn-off during processing.

The preparation steps of (2) and (3) were the same as in Example 1.

Using the test method from Example 1, the yield strength was measured to be 670 MPa, the tensile strength to be 688 MPa, and the elongation to be 4.4%, with the tensile curve shown in Figure 25.

### Example 12

In the chemical composition range of the Al-Er-Mg-Mn-Sc-Zr alloy, Al-14.6Er-7.8Mg-0.6Mn-0.5Sc-0.4Zr was selected as the nominal composition for powder preparation. The preparation steps were as follows:

### (1) Raw Material Preparation:

Pure Al (2.10 kg), pure Mg (3.90 kg), Al-20Er master alloy block (36.50 kg), Al-10Mn master alloy block (3 kg), Al-10Sc master alloy block (2.5 kg), and Al-10Zr master alloy block (2 kg) were weighed as raw materials. Based on the recovery rates of Mg, Sc, and Zr at 95%, additional pure Mg (0.20 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

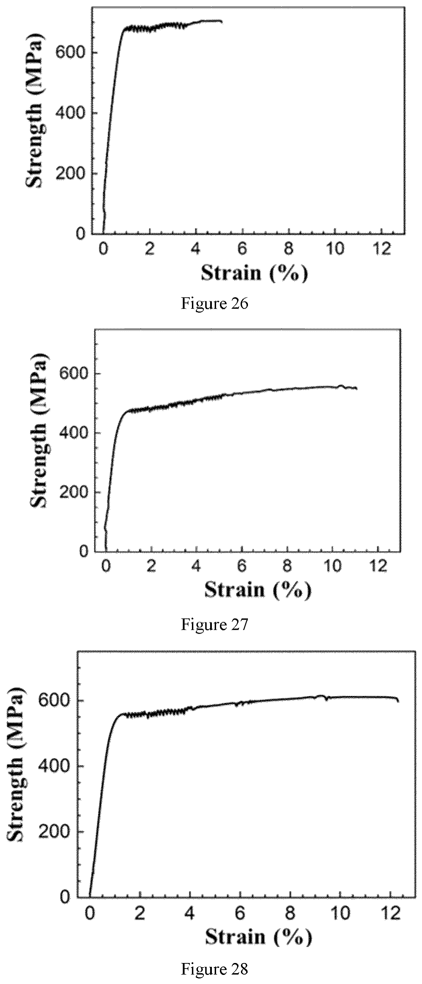

Using the test method from Example 1, the yield strength was measured to be 668 MPa, the tensile strength to be 681 MPa, and the elongation to be 5.1%, with the tensile curve shown in Figure 26.

### Example 13

In the chemical composition range of the Al-Er-Mg-Mn-Sc-Zr alloy, Al-5.0Er-4.5Mg-0.6Mn-0.3Zr was selected as the nominal composition for powder preparation. The preparation steps were as follows:

### (1) Raw Material Preparation:

Pure Al (27.50 kg), pure Mg (2.25 kg), Al-20Er master alloy block (12.5 kg), Al-10Mn master alloy block (3 kg), and Al-10Zr master alloy block (1.5 kg) were weighed as raw materials. Based on the recovery rates of Mg and Zr at 95%, additional pure Mg (0.12 kg) and Al-10Zr master alloy block (0.08 kg) were weighed as supplemental raw material to compensate for the burn-off during processing.

The preparation steps of (2) and (3) were the same as in Example 1.

Using the test method from Example 1, the yield strength was measured to be 443 MPa, the tensile strength to be 560 MPa, and the elongation to be 11%, with the tensile curve shown in Figure 27.

### Example 14

In the chemical composition range of the Al-Er-Mg-Mn-Sc-Zr alloy, Al-5.5Er-4.5Mg-0.6Mn-0.5Sc-0.4Zr was selected as the nominal composition for powder preparation. The preparation steps were as follows:

### (1) Raw Material Preparation:

Pure Al (26.50 kg), pure Mg (2.25 kg), Al-20Er master alloy block (13.75 kg), Al-10Mn master alloy block (3 kg), Al-10Sc master alloy block (2.5 kg), and Al-10Zr master alloy block (2 kg) were weighed as raw materials. Based on the recovery rates of Mg, Sc, and Zr at 95%, additional pure Mg (0.12 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

Using the test method from Example 1, the yield strength was measured to be 527 MPa, the tensile strength to be 611 MPa, and the elongation to be 12.3%, with the tensile curve shown in Figure 28.

### Example 15

In the chemical composition range of the Al-Er-Mg-Mn-Sc-Zr alloy, Al-5.0Er-3.0Mg-0.6Mn-0.7Zr was selected as the nominal composition for powder preparation. The preparation steps were as follows:

### (1) Raw Material Preparation:

Pure Al (29.50 kg), pure Mg (1.50 kg), Al-20Er master alloy block (12.50 kg), Al-10Mn master alloy block (3 kg), and Al-10Zr master alloy block (3.5 kg) were weighed as raw materials. Based on the recovery rates of Mg and Zr at 95%, additional pure Mg (0.08 kg) and Al-10Zr master alloy block (0.18 kg) were weighed as supplemental raw material to compensate for the burn-off during processing.

The preparation steps of (2) and (3) were the same as in Example 1.

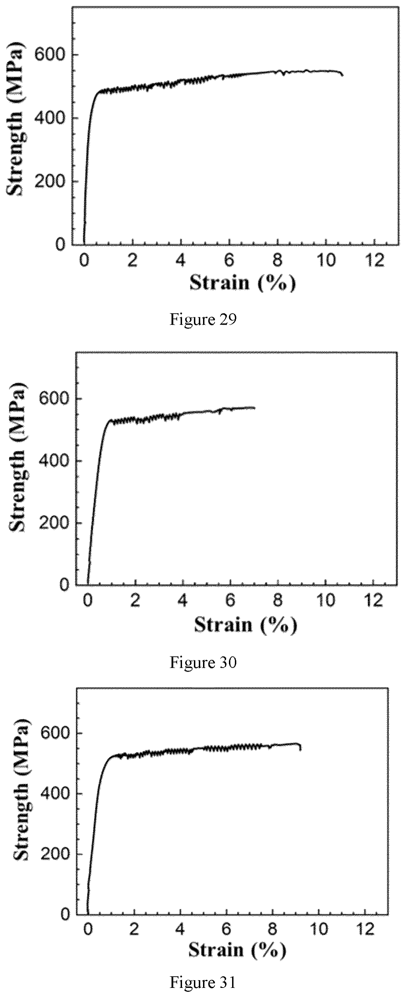

Using the test method from Example 1, the yield strength was measured to be 468 MPa, the tensile strength to be 551 MPa, and the elongation to be 10.7%, with the tensile curve shown in Figure 29.

### Example 16

In the chemical composition range of the Al-Er-Mg-Mn-Sc-Zr alloy, Al-5.0Er-3.0Mg-0.6Mn-0.5Sc-0.4Zr was selected as the nominal composition for powder preparation. The preparation steps were as follows:

### (1) Raw Material Preparation:

Pure Al (28.50 kg), pure Mg (1.50 kg), Al-20Er master alloy block (12.50 kg), Al-10Mn master alloy block (3 kg), Al-10Sc master alloy block (2.5 kg), and Al-10Zr master alloy block (2 kg) were weighed as raw materials. Based on the recovery rates of Mg, Sc, and Zr at 95%, additional pure Mg (0.08 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

Using the test method from Example 1, the yield strength was measured to be 512 MPa, the tensile strength to be 571 MPa, and the elongation to be 7.0%, with the tensile curve shown in Figure 30.

### Example 17

In the chemical composition range of the Al-Er-Mg-Mn-Sc-Zr alloy, Al-5.2Er-8.5Mg-0.6Mn-0.7Zr was selected as the nominal composition for powder preparation. The preparation steps were as follows:

### (1) Raw Material Preparation:

Pure Al (26.25 kg), pure Mg (4.25 kg), Al-20Er master alloy block (13 kg), Al-10Mn master alloy block (3 kg), and Al-10Zr master alloy block (3.5 kg) were weighed as raw materials. Based on the recovery rates of Mg and Zr at 95%, additional pure Mg (0.22 kg) and Al-10Zr master alloy block (0.18 kg) were weighed as supplemental raw material to compensate for the burn-off during processing.

The preparation steps of (2) and (3) were the same as in Example 1.

Using the test method from Example 1, the yield strength was measured to be 498 MPa, the tensile strength to be 564 MPa, and the elongation to be 9.2%, with the tensile curve shown in Figure 31.

### Example 18

In the chemical composition range of the Al-Er-Mg-Mn-Sc-Zr alloy, Al-5.2Er-8.5Mg-0.6Mn-0.5Sc-0.4Zr was selected as the nominal composition for powder preparation. The preparation steps were as follows:

### (1) Raw Material Preparation:

Pure Al (26.25 kg), pure Mg (4.25 kg), Al-20Er master alloy block (13 kg), Al-10Mn master alloy block (3 kg), Al-10Sc master alloy block (2.5 kg), and Al-10Zr master alloy block (2 kg) were weighed as raw materials. Based on the recovery rates of Mg, Sc, and Zr at 95%, additional pure Mg (0.22 kg), Al-10Sc master alloy block (0.13 kg), and Al-10Zr master alloy block (0.10 kg) were weighed as supplemental raw material to compensate for the burn-off during processing.

The preparation steps of (2) and (3) were the same as in Example 2.

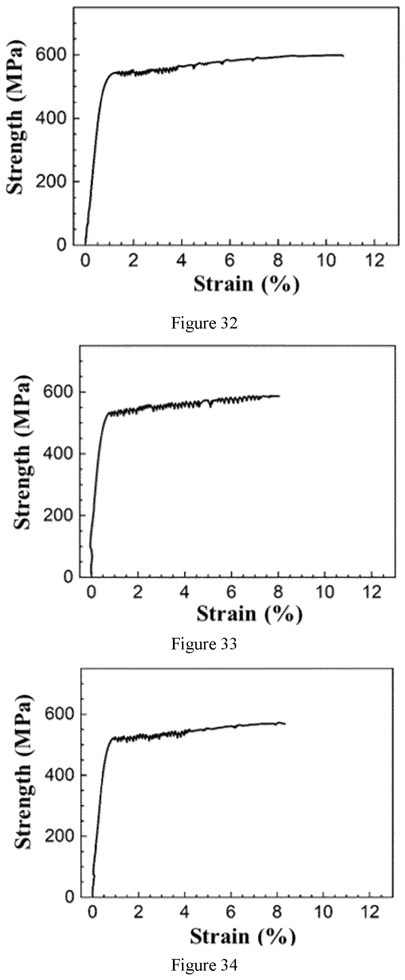

Using the test method from Example 1, the yield strength was measured to be 512 MPa, the tensile strength to be 599 MPa, and the elongation to be 10.6%, with the tensile curve shown in Figure 32.

### Example 19

In the chemical composition range of the Al-Er-Mg-Mn-Sc-Zr alloy, Al-10.8Er-4.5Mg-0.6Mn was selected as the nominal composition for powder preparation. The preparation steps were as follows:

### (1) Raw Material Preparation:

Pure Al (17.75 kg), pure Mg (2.25 kg), Al-20Er master alloy block (27 kg), and Al-10Mn master alloy block (3 kg) were weighed as raw materials. Based on the recovery rate of Mg at 95%, additional pure Mg (0.12 kg) was weighed as supplemental raw material to compensate for the burn-off during processing.

The preparation steps of (2) and (3) were the same as in Example 1.

Using the test method from Example 1, the yield strength was measured to be 507 MPa, the tensile strength to be 586 MPa, and the elongation to be 8.0%, with the tensile curve shown in Figure 33.

### Example 20

In the chemical composition range of the Al-Er-Mg-Mn-Sc-Zr alloy, Al-5.5Er-4.5Mg-0.6Mn-0.1Zr was selected as the nominal composition for powder preparation. The preparation steps were as follows:

### (1) Raw Material Preparation:

Pure Al (30.50 kg), pure Mg (2.25 kg), Al-20Er master alloy block (13.75 kg), Al-10Mn master alloy block (2.5 kg), and Al-10Zr master alloy block (0.50 kg) were weighed as raw materials. Based on the recovery rates of Mg and Zr at 95%, additional pure Mg (0.12 kg) and Al-10Zr master alloy block (0.03 kg) were weighed as supplemental raw material to compensate for the burn-off during processing.

The preparation steps of (2) and (3) were the same as in Example 1.

Using the test method from Example 1, the yield strength was measured to be 504 MPa, the tensile strength to be 572 MPa, and the elongation to be 8.3%, with the tensile curve shown in Figure 34.

### Example 21

A low Er content composition of Al-7Er-4.5Mg-0.5Mn-0.3Zr was selected as the nominal composition for powder preparation. The preparation steps were as follows:

### (1) Raw Material Preparation:

Pure Al (26.25 kg), pure Mg (2.25 kg), Al-20Er master alloy block (17.50 kg), Al-10Mn master alloy block (2.5 kg), Al-10Zr master alloy block (1.5 kg), and Al-2Sc master alloy block (2.5 kg) were weighed as raw materials. Based on the recovery rates of Mg, Zr, and Sc at 95%, additional pure Mg (0.12 kg) and Al-10Zr, Al-2Sc master alloy block (0.125 kg) were weighed as supplemental raw material to compensate for the burn-off during processing.

The preparation steps of (2) and (3) were the same as in Example 1.

Using the test method from Example 1, the yield strength was measured to be 525 MPa, the tensile strength to be 580 MPa, and the elongation to be 12.9%, with the tensile curve shown in Figure 35.

Examples 1-21 demonstrate that the disclosed high-strength aluminum-erbium alloy powders for additive manufacturing have excellent solidification characteristics and formability, achieving complete bulk materials. The as-printed state alloys have few defects, featuring a dual-mode grain structure composed of fine equiaxed and columnar grains. Particularly, the formation of low stacking fault energy Al₃Er eutectic network structures in the micrometer-sized columnar zones strengthens the material while providing plasticity through its own deformation. These microstructures improve the yield strength, tensile strength, and elongation of the disclosed as-printed state alloys, resulting in superior overall mechanical properties, especially with yield strengths surpassing all the current additive manufacturing aluminum alloy systems.

### Comparative Example 1

As a comparative example, a low Er content composition of Al-3Er-4.5Mg-0.5Mn-0.1Zr was selected as the nominal composition for powder preparation. The preparation steps were as follows:

### (1) Raw Material Preparation:

Pure Al (37.25 kg), pure Mg (2.25 kg), Al-20Er master alloy block (7.5 kg), Al-10Mn master alloy block (2.5 kg), and Al-10Zr master alloy block (0.50 kg) were weighed as raw materials. Based on the recovery rates of Mg and Zr at 95%, additional pure Mg (0.12 kg) and Al-10Zr master alloy block (0.03 kg) were weighed as supplemental raw material to compensate for the burn-off during processing.

The preparation steps of (2) and (3) were the same as in Example 1.

Using the test method from Example 1, the yield strength was measured to be 382 MPa, the tensile strength to be 460 MPa, and the elongation to be 13.2%.

It was noted that the Al₃Er eutectic network structure within the material of the present comparative example was discontinuous, as shown in Figure 36, which was a major reason for its significantly lower strength compared to other examples disclosed.

### Comparative Example 2

As a comparative example, a low Er content composition of Al-1Er-4.5Mg-0.5Mn-0.1Zr was selected as the nominal composition for powder preparation. The preparation steps were as follows:

### (1) Raw Material Preparation:

Pure Al (42.25 kg), pure Mg (2.25 kg), Al-20Er master alloy block (2.5 kg), Al-10Mn master alloy block (2.5 kg), and Al-10Zr master alloy block (0.50 kg) were weighed as raw materials. Based on the recovery rates of Mg and Zr at 95%, additional pure Mg (0.12 kg) and Al-10Zr master alloy block (0.03 kg) were weighed as supplemental raw material to compensate for the burn-off during processing.

The preparation steps of (2) and (3) were the same as in Example 1.

Using the test method from Example 1, the yield strength was measured to be 323 MPa, the tensile strength to be 415 MPa, and the elongation to be 14.3%.

### Test Example

The yield strength and tensile strength of the bulk materials prepared in the above examples are summarized in the following Table 1:

**Table 1**

| Example | Nominal Composition | Yield Strength (MPa) | Tensile Strength (MPa) | Elongation (%) |
|---|---|---|---|---|
| 1 | Al-10.8Er-4.5Mg-0.6Mn-0.7Zr | 540 | 610 | 11.8 |
| 2 | Al-10.8Er-4.5Mg-0.6Mn-0.5Sc-0.4Zr | 553 | 622 | 12 |
| 3 | Al-10.8Er-3.0Mg-0.6Mn-0.7Zr | 536 | 602 | 9.8 |
| 4 | Al-10.8Er-3.0Mg-0.6Mn-0.5Sc-0.4Zr | 538 | 596 | 9.6 |
| 5 | Al-10.8Er-8.5Mg-0.6Mn-0.7Zr | 505 | 569 | 12.6 |
| 6 | Al-10.8Er-8.5Mg-0.6Mn-0.5Sc-0.4Zr | 545 | 601 | 12.6 |
| 7 | Al-15.6Er-4.5Mg-0.6Mn-0.7Zr | 629 | 647 | 6.6 |
| 8 | Al-15.6Er-4.5Mg-0.6Mn-0.5Sc-0.4Zr | 633 | 654 | 6.1 |
| 9 | Al-15.6Er-3.3Mg-0.6Mn-0.7Zr | 568 | 623 | 9.9 |
| 10 | Al-15.6Er-3.3Mg-0.6Mn-0.5Sc-0.4Zr | 586 | 648 | 8.6 |
| 11 | Al-15.6Er-7.8Mg-0.6Mn-0.7Zr | 670 | 696 | 4.4 |
| 12 | Al-14.6Er-7.8Mg-0.6Mn-0.5Sc-0.4Zr | 668 | 705 | 5.1 |
| 13 | Al-5.0Er-4.5Mg-0.6Mn-0.3Zr | 443 | 560 | 11 |
| 14 | Al-5.5Er-4.5Mg-0.6Mn-0.5Sc-0.4Zr | 508 | 578 | 10.3 |
| 15 | Al-5.0Er-3.0Mg-0.6Mn-0.7Zr | 468 | 551 | 10.7 |
| 16 | Al-5.0Er-3.0Mg-0.6Mn-0.5Sc-0.4Zr | 512 | 571 | 11.0 |
| 17 | Al-5.2Er-8.5Mg-0.6Mn-0.7Zr | 498 | 566 | 9.2 |
| 18 | Al-5.2Er-8.5Mg-0.6Mn-0.5Sc -0.4Zr | 512 | 599 | 10.6 |
| 19 | Al-10.8Er-4.5Mg-0.6Mn | 507 | 586 | 8 |
| 20 | Al-5.5Er-4.5Mg-0.6Mn-0.1Zr | 450 | 572 | 8.3 |
| 21 | Al-7Er-4.5Mg-0.5Mn-0.3Zr-0.1Sc | 525 | 580 | 12.9 |

The yield strength and tensile strength of the bulk materials prepared in the above comparative examples are summarized in the following Table 2:

**Table 2**

| Comparative Example | Nominal Composition | Yield Strength (MPa) | Tensile Strength (MPa) | Elongation (%) |
|---|---|---|---|---|
| 1 | Al-3Er-4.5Mg-0.5Mn-0.1Zr | 382 | 460 | 13.2 |
| 2 | Al-1Er-4.5Mg-0.5Mn-0.1Zr | 323 | 415 | 14.3 |

The description of the specific exemplary embodiments of the present disclosure is for the purpose of illustration and explanation. These descriptions are not intended to limit the disclosure to the precise forms disclosed, and it is evident that many changes and variations can be made based on the teachings provided above. The purpose of selecting and describing these exemplary embodiments is to explain the specific principles of the disclosure and their practical applications, enabling those skilled in the art to implement and utilize various different exemplary embodiments of the disclosure, as well as various alternatives and modifications. The scope of the present disclosure is intended to be defined by the claims and their equivalents.

## Claims

1. An aluminum alloy, comprising:
4-20 wt% erbium (Er);
2-10 wt% magnesium (Mg);
less than or equal to 1 wt% manganese (Mn);
optionally, 0-1 wt% scandium (Sc);
optionally, 0-1 wt% zirconium (Zr).

2. The aluminum alloy according to claim 1, wherein, the aluminum alloy contains 5.0-15.6 wt% Er;
preferably, the aluminum alloy contains 3.0-8.5 wt% Mg;
preferably, the aluminum alloy contains 0.5-0.6 wt% Mn;
preferably, the aluminum alloy contains 0-0.7 wt% Zr;
preferably, the aluminum alloy contains 0-0.5 wt% Sc.

3. The aluminum alloy according to claim 1, wherein, comprising:
10.8 wt% Er, 4.5 wt% Mg, 0.6 wt% Mn, 0.7 wt% Zr; or,
10.8 wt% Er, 4.5 wt% Mg, 0.6 wt% Mn, 0.5 wt% Sc, 0.4 wt% Zr; or,
10.8 wt% Er, 3.0 wt% Mg, 0.6 wt% Mn, 0.7 wt% Zr; or,
10.8 wt% Er, 3.0 wt% Mg, 0.6 wt% Mn, 0.5 wt% Sc, 0.4 wt% Zr; or,
10.8 wt% Er, 8.5 wt% Mg, 0.6 wt% Mn, 0.7 wt% Zr; or,
10.8 wt% Er, 8.5 wt% Mg, 0.6 wt% Mn, 0.5 wt% Sc, 0.4 wt% Zr; or,
15.6 wt% Er, 4.5 wt% Mg, 0.6 wt% Mn, 0.7 wt% Zr; or,
15.6 wt% Er, 4.5 wt% Mg, 0.6 wt% Mn, 0.5 wt% Sc, 0.4 wt% Zr; or,
15.6 wt% Er, 3.3 wt% Mg, 0.6 wt% Mn, 0.7 wt% Zr; or,
15.6 wt% Er, 3.3 wt% Mg, 0.6 wt% Mn, 0.5 wt% Sc, 0.4 wt% Zr; or,
15.6 wt% Er, 7.8 wt% Mg, 0.6 wt% Mn, 0.7 wt% Zr; or,
14.6 wt% Er, 7.8 wt% Mg, 0.6 wt% Mn, 0.5 wt% Sc, 0.4 wt% Zr; or,
5.0 wt% Er, 4.5 wt% Mg, 0.6 wt% Mn, 0.3 wt% Zr; or,
5.5 wt% Er, 4.5 wt% Mg, 0.6 wt% Mn, 0.5 wt% Sc, 0.4 wt% Zr; or,
5.0 wt% Er, 3.0 wt% Mg, 0.6 wt% Mn, 0.7 wt% Zr; or,
5.0 wt% Er, 3.0 wt% Mg, 0.6 wt% Mn, 0.5 wt% Sc, 0.40 wt% Zr; or,
5.2 wt% Er, 8.5 wt% Mg, 0.6 wt% Mn, 0.7 wt% Zr; or,
5.2 wt% Er, 8.5 wt% Mg, 0.6 wt% Mn, 0.50 wt% Sc, 0.4 wt% Zr; or,
10.8 wt% Er, 4.5 wt% Mg, 0.6 wt% Mn; or,
5.5 wt% Er, 4.5 wt% Mg, 0.6 wt% Mn, 0.1 wt% Zr; or,
7.0 wt% Er, 4.5 wt% Mg, 0.5 wt% Mn, 0.3 wt% Zr, 0.1 wt% Sc.

4. The aluminum alloy according to any one of claims 1 to 3, wherein the aluminum alloy contains aluminum (Al) as the remainder, and unavoidable impurities.

5. The aluminum alloy according to any one of claims 1 to 4, wherein the alloy is manufactured into a powder form, which can be used in an additive manufacturing method.

6. The aluminum alloy according to any one of claims 1 to 5, wherein the alloy exhibits a dual grain morphology with coexisting columnar and equiaxed grains;
preferably, the grain size of the alloy is between 500 nm and approximately 2 µm.

7. The aluminum alloy according to claim 6, wherein the columnar grain contains a continuous network of Al₃Er cellular eutectic structure;
preferably, within the network structures, the network cell size ranges from 300-400 nm;
preferably, the Al₃Er cellular eutectic network structure includes twinning structure;
preferably, the Al₃Er cellular eutectic network structure includes 9R structure.

8. A method for preparing the aluminum alloy according to any one of claims 1 to 7, comprising:
preparing the aluminum alloy by a rapid solidification process; the rapid solidification process is preferably selected from one or more of atomization powdering, spray deposition, continuous casting, melt spinning, melt extraction, beam glazing, and additive manufacturing;
preferably, the atomization powdering includes one or more selected from gas atomization, rotating electrode atomization, and ultrasonic atomization;
preferably, the additive manufacturing process includes one or more selected from Laser Selective Melting Additive Manufacturing, Laser Directed Energy Deposition Additive Manufacturing, Electron Beam Selective Melting Additive Manufacturing, and Electron Beam Directed Energy Deposition Additive Manufacturing.

9. The method according to claim 8, wherein the preparation method of the aluminum alloy includes: smelting to produce an aluminum-erbium alloy preformed ingot, obtaining the aluminum-erbium alloy powder via a method of gas atomization powdering;
preferably, the preparation of the aluminum-erbium alloy preformed ingot includes the following steps:
S1: according to the weight percentage of the alloy composition, weighing pure Al, pure Mg, Al-Er master alloy block, and Al-Mn master alloy block as raw materials, optionally, the raw materials further include Al-Sc master alloy block and/or Al-Zr master alloy block;
S2: mixing pure Al and Al-Er master alloy block, heating to melt and stirring to obtain melt A;
S3: adding Al-Mn master alloy block into melt A, heating and stirring to obtain melt B;
when the aluminum-erbium alloy contains Sc, additionally adding Al-Sc master alloy block to melt A; when the aluminum-erbium alloy contains Zr, additionally adding Al-Zr master alloy block to melt A;
S4: pressing pure Mg into melt B to obtain melt C;
S5: adding refining agents and covering agents to the melt obtained in step S4 and degassing under vacuum to obtain melt D;
S6: removing slag from melt D and casting into a preheated mold to obtain a metal ingot.

10. An additive manufacturing component made from the gas atomized powder of the aluminum alloy according to any one of claims 1 to 7;
preferably, the component has a yield strength greater than 440 MPa, a tensile strength greater than 550 MPa, and an elongation greater than 58%;
preferably, after being maintained at 250-350°C for 5-40 minutes, the component has a yield strength greater than 580 MPa, a tensile strength greater than 630 MPa, and an elongation greater than 8%.

11. A method for manufacturing a component, comprising:
manufacturing the powder form of the aluminum alloy according to any one of claims 1 to 7; using the powder form in an additive manufacturing process to manufacture the component.
